## Europäisches Patentamt
## European Patent Office
## Office européen des brevets

(19)

(11) Veröffentlichungsnummer: **0 247 448**
A2

(12) **EUROPÄISCHE PATENTANMELDUNG**

(21) Anmeldenummer: **87107000.9**

(22) Anmeldetag: **14.05.87**

(51) Int. Cl.⁴: **B 60 H 1/24**

(30) Priorität: **28.05.86 DE 8614428 U**

(43) Veröffentlichungstag der Anmeldung: **02.12.87**
**Patentblatt 87/49**

(84) Benannte Vertragsstaaten: **DE FR GB**

(71) Anmelder: **AUDI AG, Postfach 220, D-8070 Ingolstadt (DE)**

(72) Erfinder: **Pflugfelder, Karl, Waiblinger Weg 29, D-7107 Neckarsulm (DE)**

(74) Vertreter: **Speidel, Eberhardt, Postfach 1320 Waldpromenade 26, D-8035 Gauting (DE)**

(54) **Belüftungsvorrichtung für den Innenraum eines Kraftfahrzeuges.**

(57) Eine Belüftungsvorrichtung für den Innenraum eines Kraftfahrzeuges weist ein Gehäuse 1 mit einem im Querschnitt rechteckigen Einlassstutzen 3 und einer im Querschnitt rechteckigen Ausströmöffnung 4 auf. Der Querschnitt des Einlassstutzens 3 ist kleiner als der Querschnitt der Ausströmöffnung 4, und der Einlassstutzen 3 ist zur Ausströmöffnung 4 seitlich derart versetzt, dass drei Seiten der Querschnittsfläche des Einlassstutzens 3 und der Ausströmöffnung 4 miteinander fluchten. Um trotz der versetzten Anordnung einen gleichmässigen Luftaustritt über den gesamten Querschnitt der Ausströmöffnung 4 zu erreichen, sind auf den Seitenflächen der im Einlassstutzen 3 schwenkbar angeordneten Absperrklappe 6 miteinander fluchtende Leitrippen 9 vorgesehen, die derart schräg gestellt sind, dass ein Teil des durch den Einlassstutzen 3 einströmenden Luftstroms auf den Abschnitt 14 der Ausströmöffnung 4 geleitet wird, der mit dem Einlassstutzen 3 nicht fluchtet.

## Belüftungsvorrichtung für den Innenraum eines Kraftfahrzeuges

Die Erfindung bezieht sich auf eine Belüftungsvorrichtung für den Innenraum eines Kraftfahrzeuges entsprechend dem Oberbegriff des Anspruchs 1. Derartige Belüftungsvorrichtungen sind praktisch in jedem Kraftfahrzeug vorhanden. Um eine gute und möglichst zugfreie, zumindest aber zugarme Belüftung des Innenraumes zu erreichen, ist es üblich, eine Mehrzahl von Luftausströmöffnungen mit einem relativ großen Gesamtquerschnitt vorzusehen. Die Zuführung der Luft zu diesen Ausströmöffnungen bedingt entweder die Anordnung einer entsprechenden Anzahl von Luftschläuchen, was aufwendig ist, oder die Anordnung eines sich über die ganze Länge des Armaturenbrettes erstreckenden Luftkanals, von dem die einzelnen Austrittsöffnungen abgehen. Dies ist in der DE-OS 28 13 909 dargestellt. Ein Hauptnachteil dieser Anordnung besteht darin, daß es nicht möglich ist, in dem Bereich, in dem der Luftkanal verläuft, direkt am Armaturenbrett Instrumente, Schalter, Bedienungsknöpfe und dergleichen anzubringen, die von rückwärts zugänglich sein müssen. Außerdem ist es bei dieser Ausführung äußerst schwierig, eine gleichmäßige Luftverteilung vorzunehmen, da die Luft an einer Stelle in den Kanal eingeblasen wird und die Ausströmgeschwindigkeit umso geringer ist, je weiter sich die Ausströmöffnung von der Zuströmöffnung entfernt ist.

Der Erfindung liegt die Aufgabe zugrunde, eine Belüftungseinrichtung gemäß dem Oberbegriff des Anspruchs 1 zu schaffen, die einen großen Ausströmquerschnitt mit gleichmäßiger Luftverteilung aufweist, deren Raumbedarf jedoch erheblich geringer ist als bei bekannten Belüftungseinrichtungen.

Diese Aufgabe wird erfindungsgemäß durch die im Kennzeichen des Anspruchs 1 angegebenen Merkmale gelöst.

Da bei dem erfindungsgemäßen Vorschlag der Querschnitt des Einlaßstutzens erheblich kleiner ist als der Querschnitt der Ausströmöffnung, ist auch der Querschnitt der an den Einlaßstutzen angeschlossenen Belüftungleitung verhältnismäßig klein, wodurch der Platzbedarf gesenkt und die Kosten verringert werden. Trotzdem wird ein weitgehend gleichmäßiger Luftaustritt über den ganzen Querschnitt der Ausströmöffnung erreicht.

Vorteilhafte Weiterbildungen der Erfindung ergeben sich aus den Unteransprüchen.

Ein Ausführungsbeispiel der Erfindung ist im folgenden unter Bezugnahme auf die Zeichnungen beschrieben. Es zeigt:

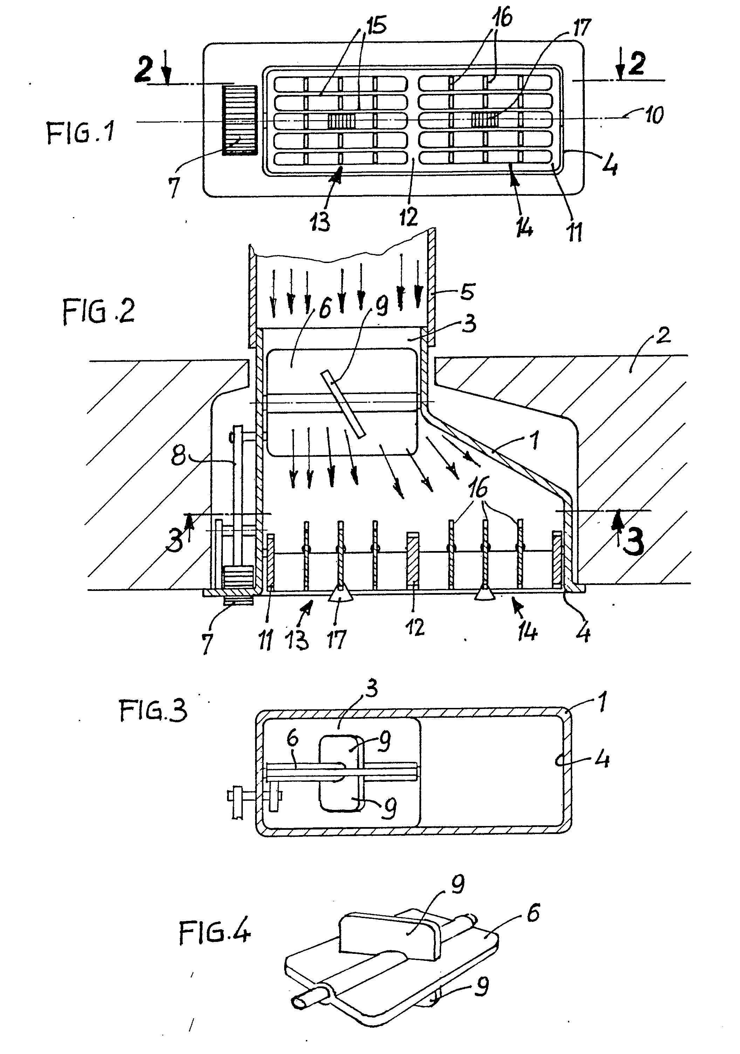

Fig. 1     eine Ansicht der Belüftungsvorrichtung von vorn, d. h. vom Fahrzeuginnenraum her,

Fig. 2     einen Schnitt entlang Linie 2-2 in Fig. 1,

Fig. 3     einen Schnitt entlang Linie 3-3 in Fig. 2 und

Fig. 4     eine perspektivische Darstellung der Verschlußklappe.

Das Gehäuse 1 der Belüftungsvorrichtung ist zum Einbau in ein Armaturenbrett 2 bestimmt und weist auf der Rückseite einen Einlaßstutzen 3 und auf der Vorderseite eine rechteckige Ausströmöffnung 4 auf. An den Einlaßstutzen 3 ist eine Belüftungsleitung 5 angeschlossen. Im Einlaßstutzen 3 ist eine Absperrklappe 6 um eine waagrechte Achse drehbar angeordnet. Die Absperrklappe 6 kann durch ein Rad 7, das im Gehäuse 1 drehbar gelagert ist, über ein Gestänge 8 verschwenkt werden.

Wie aus Fig. 3 ersichtlich, hat der Einlaßstutzen 3 einen rechteckigen Querschnitt, dessen Breite gleich der Breite des Querschnitts der Ausströmöffnung 4 ist, dessen Länge jedoch nur etwa der halben Länge des rechteckigen Querschnitts der Ausströmöffnung 4 entspricht. Der Einlaßstutzen 3 ist bezüglich der Ausströmöffnung 4 seitlich versetzt angeordnet, derart, daß drei Seiten der rechteckigen Querschnitte des Einlaßstutzens 3 und der Ausströmöffnung 4 miteinander fluchten. Um trotz dieser versetzten Anordnung des Einlaßstutzens einen gleichmäßigen Luftaustritt über den gesamten Querschnitt der Ausströmöffnung 4 zu erreichen, sind auf beiden Seiten der Absperrklappe 6 miteinander fluchtende Leitrippen 9 angeordnet, die derart schräg gestellt sind, daß sie etwa die Hälfte des durch den Einlaßstutzen 3 einströmenden Luftstromes in den Bereich der Ausströmöffnung 4 leiten, der mit dem Einlaßstutzen 3 nicht fluchtet. Auf diese Weise läßt sich eine große Ausströmöffnung mit gleichmäßiger Luftverteilung trotz des wesentlich kleineren Querschnittes des Einlaßstutzens 3 erreichen. Der kleine Querschnitt des Einlaßstutzens 3 ermöglicht seinerseits die Verwendung einer Belüftungsleitung 5 mit entsprechend kleinem Querschnitt, wodurch deren Platzbedarf und Kosten verringert werden.

In der Ausströmöffnung 4 ist im Ausführungsbeispiel ein um eine waagrechte Achse 10 drehbarer Rahmen 11 eingesetzt, der in seiner Mitte eine senkrechte Trennwand 12 aufweist, welche die Ausströmöffnung 4 in zwei nebeneinander liegende Abschnitte 13 und 14 aufteilt. Dabei fluchtet der Einlaßstutzen 3 im wesentlichen mit dem Abschnitt 13. Jeder Abschnitt 13, 14 weist waagrechte Stege 15, sowie gemeinsam um senkrechte Achsen verschwenkbare Lamellen 16 auf. Die Lamellen 16 jedes Abschnittes 13, 14 können durch eine an einem der Lamellen angebrachte Handhabe 17 verdreht werden, wobei die Lamellen des einen Abschnittes unabhängig von den Lamellen des anderen Abschnittes verdreht werden können. Durch Verschwenken des Rahmens 11 um die Achse 10 läßt sich somit jede gewünschte Strömungsrichtung der austretenden Luft erreichen.

Die Erfindung ist nicht auf das dargestellte Ausführungsbeispiel beschränkt. Die Vorteile der Erfindung sind auch dann gegeben, wenn kein schwenkbarer Rahmen mit drehbaren Lamellen in der Austrittsöffnung 4 angeordnet ist, sondern diese durch feststehende Stege oder Leitflächen unterteilt ist, oder wenn die Trennwand 12 fest ist und jeder Abschnitt 13, 14 einen eigenen, um eine waagrechte Achse schwenkbaren Rahmen aufweist.

AUDI AG
**0 247 448**

??107000.?

Neckarsulm, 27.05.1986
350/86

G 86 14 428.6    angemeldet am 28.05.1986

S c h u t z a n s p r ü c h e

1. Belüftungseinrichtung für den Innenraum eines Kraftfahrzeuges, insbesondere zur Anordnung im Armaturenbrett, mit einem Gehäuse, das einen an eine Belüftungsleitung anschließbaren Einlaßstutzen mit einer
manuell betätigbaren Absperrklappe und eine rechteckige Ausströmöffnung aufweist,

**d a d u r c h   g e k e n n z e i c h n e t ,**

daß der Querschnitt des Einlaßstutzens (3) ebenfalls
rechteckig, jedoch kleiner ist als der Querschnitt
der Ausströmöffnung (4), und daß auf der Absperrklappe
(6) eine Leiteinrichtung (9) zum weitgehend gleichmäßigen Verteilen des durch den Einlaßstutzen einströmenden Luftstromes auf den Querschnitt der Ausströmöffnung
(4) vorgesehen ist.

- 2 -

2. Belüftungsvorrichtung nach Anspruch 1,

**d a d u r c h   g e k e n n z e i c h n e t ,**

daß die Breite der Querschnitte des Einlaßstutzens (3) und der Ausströmöffnung (4) gleich, die Länge des Querschnittes des Einlaßstutzens (3) jedoch kleiner ist als die Länge des Querschnittes der Ausströmöffnung (4), und daß drei Seiten der rechteckigen Querschnitte des Einlaßstutzens und der Ausströmöffnung miteinander fluchten.

3. Belüftungsvorrichtung nach Anspruch 1 und 2,

**d a d u r c h   g e k e n n z e i c h n e t ,**

daß die Ausströmöffnung (4) durch eine Trennwand (12) in zwei Abschnitte (13, 14) aufgeteilt ist und daß der Einlaßstutzen (3) mit einem (13) dieser Abschnitte fluchtet.

4. Belüftungsvorrichtung nach Anspruch 3,

**d a d u r c h   g e k e n n z e i c h n e t ,**

daß in die Ausströmöffnung (4) ein um eine waagrechte Achse drehbarer Rahmen (11) eingesetzt ist, der in seiner Mitte eine senkrechte Trennwand (12) aufweist, welche die Ausströmöffnung in die beiden Abschnitte (13, 14) aufteilt, und daß jeder Abschnitt (13, 14) parallele, gemeinsam um senkrechte Achsen verschwenkbare Lamellen enthält, wobei die Lamellen des einen Abschnittes von denjenigen des anderen Abschnittes unabhängig sind.

5. Belüftungseinrichtung nach Anspruch 3 oder 4,

d a d u r c h   g e k e n n z e i c h n e t ,

daß die Absperrklappe (6) auf beiden Seiten mit miteinander fluchtenden Leitrippen (9) versehen ist, die derart schräg gestellt sind, daß etwa die Hälfte des einströmenden Luftstromes auf den Abschnitt (14) der Ausströmöffnung hin umgelenkt wird, der mit dem Einlaßstutzen (3) nicht fluchtet.

FIG.1

FIG.2

FIG.3

FIG.4